# FASCICULE DE BREVET EUROPEEN

(11) **EP 4 519 070 B1**
(45) Date de publication et mention de la délivrance du brevet: **14.01.2026**
(21) Numéro de dépôt: 23726546.7
(22) Date de dépôt: 25.04.2023
(51) Int. Cl.: B29C 70/38, B65H 23/00

(54) **MACHINE D'APPLICATION DE FIBRES AVEC TÊTE D'APPLICATION ÉQUIPÉE D'UN SYSTÈME LIMITEUR DE TENSION**
FASERAPPLIKATIONSMASCHINE MIT APPLIKATIONSKOPF MIT EINEM SPANNUNGSBEGRENZUNGSSYSTEM
FIBRE APPLICATION MACHINE WITH APPLICATION HEAD PROVIDED WITH A TENSION-LIMITING SYSTEM

(30) Priorité: 02.05.2022 FR 2204153
(43) Date de publication de la demande: 12.03.2025
(73) Titulaire: Coriolis Group, 56530 Quéven (FR)
(72) Inventeur: GAILLARD, Loïc, 56600 Lanester (FR); COUDURIER, Julien, 56100 Lorient (FR)
(86) Numéro de dépôt international: PCT/FR2023/000051
(87) Numéro de publication internationale: WO 2023/214123

(56) Documents cités:
- EP-B1- 2 594 389
- FR-A1- 3 070 625

## Description

La présente invention concerne une machine d'application de fibres équipée d'un système limiteur de tension particulier, ainsi qu'un procédé de réalisation d'une pièce en matériau composite au moyen d'une telle machine.

Il est connu, notamment dans le document brevet WO2006/092514 des machines d'application de fibres pour le drapage automatique sur un surface de drapage, telle que la surface d'un moule mâle ou femelle, d'une bande large formée d'une ou plusieurs fibres, en particulier des fibres continues plates de type rubans, couramment appelées mèches, notamment des fibres de carbone constituées d'une multitude de fils ou filaments de carbone.

Ces machines, appelées classiquement machines de placement de fibres, comprennent classiquement une tête d'application de fibres comprenant partie fixe et une partie mobile, la partie mobile comprenant un rouleau d'application pour l'application d'au moins une fibre, en particulier d'une bande formée d'une ou plusieurs fibres, sur une surface d'application, et un système de guidage pour guider au moins une fibre vers ledit rouleau d'application selon un plan de guidage, et pour chaque fibre, un système de coupe de fibre, un système de réacheminement de fibre, et un système de blocage de fibre. La partie mobile est montée coulissante sur la partie fixe, et est sollicitée par au moins un vérin de compactage. Ces machines comprennent en outre des moyens de stockage de fibres, tel qu'un cantre de bobines déporté, des moyens d'acheminement pour acheminer des fibres desdits moyens de stockage vers la tête, et un système de déplacement apte par exemple à déplacer la tête par rapport à la surface de drapage.

Les moyens d'acheminement peuvent comprendre des tubes flexibles, chaque tube flexible est apte à recevoir une fibre dans son passage interne et est de préférence muni d'au moins une lame flexible longitudinale disposée sensiblement parallèlement au plan de transport de la fibre reçue dans le passage interne du tube flexible. De tels tubes flexibles forment des moyens d'acheminement simples de conception, d'encombrement et de coûts réduits, permettant d'obtenir des vitesses de défilement élevées, de déporter les moyens de stockage du système de déplacement, d'isoler les fibres de l'extérieur, et de simplifier le système de déplacement de la tête d'application, notamment d'utiliser un système de déplacement tel qu'un bras poly-articulé de type robot six axes standard.

Afin de limiter la tension dans la fibre, il a été proposé dans le document brevet précité de prévoir au moins un système limiteur de tension, disposé entre les moyens de stockage de fibres et la tête d'application, ledit système limiteur de tension comportant au moins deux cylindres parallèles entre eux, sur lesquels une pluralité de fibres sont aptes à venir s'enrouler partiellement, et des moyens d'entraînement pour entraîner en rotation lesdits cylindres sensiblement à la même vitesse. Lesdits moyens d'entraînement sont pilotés par une unité de commande de la machine, de sorte que les vitesses périphériques des cylindres soient supérieures aux vitesses de défilement des fibres, au niveau du rouleau d'application, pour exercer un effort de traction sur les fibres provenant des moyens de stockage, afin de limiter la tension d'appel des fibres au niveau du rouleau d'application, quelle que soit la vitesse de défilement des fibres. Le système de limiteur de tension est classiquement placé dans le cantre ou en sortie de cantre, ou le long du chemin de fibre défini par les moyens d'acheminement, entre les moyens de stockage et la tête. Un tel système limiteur de tension permet le déroulage de plusieurs bobines ou le dévidage de plusieurs pelotes de fibres avec un seul asservissement, pour des fibres défilant à des vitesses différentes au niveau de la tête d'application. Le système limiteur de tension permet de réduire la tension des fibres au niveau du rouleau d'application quelles que soient leurs vitesses. EP 2 594 389 B1 divulgue le préambule de la revendication 1.

Les machines proposées à jour avec un tel système limiteur de tension permettent ainsi d'appliquer une ou plusieurs fibres avec une faible tension. Cette faible tension restante peut toutefois altérer la qualité de drapage, notamment dans le cas de drapage à vitesses élevées, plus particulièrement lors d'opérations de coupe et de réacheminement de fibres à la volée, à vitesses élevées.

Le but de la présente invention est de proposer une solution visant à pallier les inconvénients précités.

A cet effet, la présente invention propose une machine d'application de fibres pour la réalisation de pièces en matériau composite comprenant
- une tête d'application de fibres comprenant une structure support ou partie fixe et une partie mobile, la partie mobile comprenant
   - un système de compactage comprenant au moins un rouleau d'application pour l'application d'au moins une fibre, en particulier d'une bande formée d'une ou plusieurs fibres, sur une surface d'application,
- un système de guidage pour guider au moins une fibre vers ledit rouleau d'application selon un plan de guidage, et
- un système de coupe de fibre et un système de réacheminement de fibre, et de préférence un système de blocage de fibre,

la partie mobile étant montée coulissante sur la partie fixe selon un plan de coulissement, et étant sollicitée par au moins un vérin de compactage monté entre la partie fixe et la partie mobile,
ladite machine comprenant en outre un système limiteur de tension comprenant au moins un cylindre sur lequel chaque fibre est apte à venir s'enrouler partiellement, et des moyens d'entraînement aptes à entraîner en rotation ledit cylindre, de sorte que la vitesse périphérique du cylindre soit supérieure à la vitesse de défilement de la fibre dans la tête,
caractérisée en ce que ledit système limiteur de tension est monté sur la partie mobile de la tête d'application, en amont du système de guidage par rapport à la direction d'avancement de la fibre dans la tête.

Selon l'invention, un système limiteur de tension est monté sur la partie mobile de la tête, au plus près du système de réacheminement, du système de coupe et du système de compactage, de préférence sans système de renvoi intermédiaire intercalé entre le système limiteur de tension et le système de compactage, de sorte que la tension de fibre lors du drapage soit la plus réduite possible. Cette très faible tension de fibre dans la tête permet notamment d'obtenir un positionnement précis des extrémités de fibres à des vitesses de drapage élevées, par exemple à plus de 1m/s, notamment lors de coupe de fibre et/ou de réacheminement de fibre à la volée. En effet, la faible tension de fibre évite les problèmes, notamment de glissement, lors du réacheminement de fibre et permet ainsi un positionnement précis des extrémités de fibre. Cette faible tension de fibre permet par ailleurs d'augmenter les capacités de drapage de fibre avec une courbure importante dans le plan de la fibre, classiquement appelé « steering ». Dans le cas d'une tête apte à appliquer une bande de fibres, un système de limiteur de tension ainsi positionné sur la partie mobile permet d'avoir une tension de fibre au niveau du rouleau d'application qui est sensiblement identique pour toutes les fibres, ce qui garantit une qualité de drapage optimale de la bande.

Selon un mode de réalisation, ledit système limiteur de tension est monté sur la partie mobile de la tête d'application, de sorte que la fibre sortant du système limiteur de tension soit disposée selon ledit plan de guidage défini par les systèmes de guidage.

Selon un mode de réalisation, dans le cas d'une machine prévue pour l'application d'une bande formée de plusieurs fibres, ledit système de guidage est apte à guider une pluralité de fibres vers le rouleau d'application sous la forme d'une bande, le système de guidage comprend des premiers et seconds moyens de guidage, disposés en quinconce, pour guider les fibres vers le rouleau d'application sous la forme de deux nappes selon deux plans de guidage, se rapprochant l'un de l'autre d'amont en aval, le système limiteur de tension comprenant un premier ensemble d'au moins un cylindre, de préférence d'au moins deux cylindres, sur lequel passe la ou les fibres d'une première nappe et un second ensemble d'au moins un cylindre, de préférence au moins deux cylindres, sur lequel passe la ou les fibres d'une deuxième nappe, de préférence la ou les fibres de la première nappe étant disposées en sortie du premier ensemble selon un premier plan de guidage et la ou les fibres de la deuxième nappe étant disposées en sortie du second ensemble selon un deuxième plan de guidage. Le système limiteur de tension selon l'invention permet avantageusement de limiter les écarts de tension entre les fibres de la bande, et ainsi de garantir une bonne qualité de drapage.

Selon un mode de réalisation, les moyens de guidage comprennent des premiers canaux et des seconds canaux destinés respectivement à recevoir individuellement les fibres de la première et de la seconde nappe, de préférence lesdits premiers canaux sont formés à l'interface d'assemblage entre une première plaque extérieure et une plaque centrale, et lesdits seconds canaux sont formés à l'interface d'assemblage entre ladite plaque centrale et une deuxième plaque extérieure.

Selon un mode de réalisation, le système de réacheminement comprend, pour chaque fibre, un contre-galet actionné par un système d'actionnement, par exemple un vérin pneumatique, entre une position de repos et une position active pour plaquer la fibre contre au moins un rouleau d'entraînement, ledit rouleau d'entraînement et le(s) cylindre(s) du système limiteur de tension étant aptes à être entraînés en rotation par un moteur d'entraînement commun, monté de préférence sur la partie mobile, par l'intermédiaire d'un système de transmission de sorte que la vitesse périphérique des cylindres soit supérieure, de préférence d'au moins 5 %, par exemple d'environ 20%, à la vitesse périphérique du rouleau d'entrainement. Le montage du système limiteur de tension sur la partie mobile permet avantageusement d'utiliser le moteur du système de réacheminement pour l'entrainement des cylindres, en prévoyant des moyens de transmission appropriés pour obtenir les vitesses périphériques souhaitées pour les cylindres et le rouleau d'entrainement. Cette solution permet de simplifier le pilotage en vitesse du ou des cylindres, d'éviter d'embarquer un deuxième moteur sur la partie mobile et ainsi de proposer un système limiteur de tension de faible encombrement, et de poids réduit.

Lesdits moyens de transmission comprennent par exemple une ou plusieurs courroies et/ou un ou plusieurs systèmes d'engrenage, engrenant avec une roue dentée associée à chaque cylindre, un pignon associé au rouleau d'entrainement, ainsi qu'un ou plusieurs pignons associés à l'arbre du moteur d'entrainement, et éventuellement des galets de renvoi.

Dans le cas d'une machine prévue pour l'application de plusieurs fibres, le système de réacheminement comprend des premiers moyens de réacheminement comportant au moins un premier rouleau d'entraînement et des contre-galets actionnés par des systèmes d'actionnement entre une position de repos et une position active pour plaquer individuellement les fibres de la première nappe contre ledit premier rouleau d'entraînement, et des seconds moyens de réacheminement comportant au moins un second rouleau d'entraînement et des contre-galets actionnés entre une position de repos et une position active par des systèmes d'actionnement pour plaquer individuellement les fibres de la deuxième nappe contre ledit second rouleau d'entraînement, les rouleaux d'entraînement étant entraînés par le moteur d'entraînement commun.

La machine peut comprendre en outre des moyens de stockage de fibre, tel qu'un cantre de bobines déporté de la tête ou monté sur un support solidaire de la partie fixe de la tête, des moyens d'acheminement pour acheminer une ou des fibres depuis les moyens de stockage vers la tête, et un système de déplacement apte à effectuer un déplacement relatif de la tête par rapport à une surface de drapage, en particulier apte à déplacer la tête. Selon un mode de réalisation, les moyens d'acheminement comprennent au moins un tube d'acheminement flexible, chaque tube d'acheminement étant apte à recevoir une fibre dans son passage interne.

Selon un mode de réalisation, de préférence lorsque les moyens de stockage sont déportés de la tête, et que les moyens d'acheminement comprennent un ou plusieurs tubes d'acheminement la machine comprend un deuxième système limiteur de tension, disposé en amont de moyens d'acheminement aptes à acheminer une ou plusieurs fibres depuis des moyens de stockage vers la tête d'application. Ce deuxième système limiteur de tension permet de réduire efficacement la tension des fibres avant leur entrée dans les tubes d'acheminement, et ainsi de garantir un acheminement efficace des fibres dans les tubes et une tension de fibre peu importante en sortie de tubes d'acheminement. Cette tension de fibre peu importante en sortie de tubes peut être réduite efficacement, et uniformisée d'une fibre à l'autre, avec le système limiteur de tension selon l'invention embarqué sur la partie mobile de la tête, notamment avec un système limiteur de tension d'encombrement réduit, comprenant un nombre réduit de cylindres, par exemple uniquement deux cylindres pour chaque fibre.

Selon un mode de réalisation, tel que décrit dans la demande FR2114113 déposée la 23/12/2021 par la demanderesse, pour chaque fibre, une courroie est montée autour de chaque cylindre, de sorte qu'une courroie vienne s'intercaler entre chaque fibre et le cylindre, chaque courroie étant apte à adhérer à une fibre et à être entrainée plus ou moins par le cylindre en fonction de la pression exercée par la fibre sur la courroie. Pour limiter la portion angulaire de contact entre la courroie et le cylindre, chaque courroie est de préférence montée en boucle sur un chemin de glissement formé en partie par le cylindre et une pièce complémentaire en forme de croissant de lune, montée fixe autour du cylindre de sorte que des parties d'extrémités de ladite pièce complémentaire viennent tangentiellement s'adapter au cylindre. De préférence, des flasques de guidage, en forme générale de C, sont aptes à être montés par encliquetage sur le cylindre et la pièce intermédiaire de sorte que chaque fibre et chaque courroie soient guidées entre deux flasques, chaque flasque comprenant à chaque extrémité au moins un ergot apte à venir s'encliqueter élastiquement dans un renfoncement de la pièce intermédiaire. Dans ce mode de réalisation, les flasques peuvent aisément être démontés, pour leur remplacement, ou pour permettre le remplacement des courroies.

La présente invention a également pour objet un procédé de fabrication d'une pièce en matériau composite comprenant l'application de fibres continues sur une surface d'application, caractérisé en ce que l'application de fibres est réalisée au moyen d'une machine d'application de fibres telle que définie précédemment, par déplacement relatif de la tête d'application par rapport à la surface de drapage selon des trajectoires de drapage.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la Figure 1 est une vue schématique de côté d'une machine d'application de fibres selon l'invention, comprenant une tête équipée d'un système limiteur de tension ; et,
- la Figure 2 et la Figure 3 sont des vues schématiques agrandies de côté de la tête d'application de la figure 1.

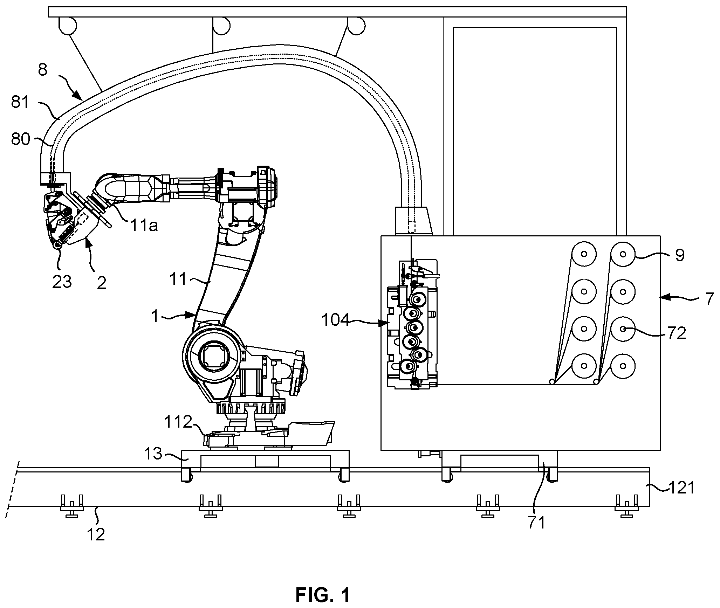

La Figure 1 illustre de manière schématique une machine de placement de fibres selon l'invention, permettant le drapage au contact sur un moule d'une bande formée de plusieurs fibres. La machine d'application comprend un système de déplacement 1 formé d'un bras poly-articulé 11, du type robot six axes, connu en soi, monté mobile sur un axe linéaire 12, une tête d'application 2 montée au poignet d'extrémité 11a du bras poly-articulé, des moyens de stockage 7 de fibres, et des moyens d'acheminement 8 pour acheminer des fibres depuis lesdits moyens de stockage vers la tête d'application.

Le bras poly-articulé 11 est fixé par son embase 112 sur un chariot 13 monté coulissant sur l'axe linéaire 12, ledit axe linéaire étant constitué de deux rails 121 parallèles fixés au sol. Le chariot est équipé de moyens d'entraînement, par exemple de type galets motorisés, asservis par une unité de commande de la machine pour le déplacement de la tête de placement le long de ces rails.

La tête d'application de fibres 2, appelée également tête de placement de fibres, comprend un rouleau d'application ou rouleau de compactage 23 apte à venir en contact avec un moule pour appliquer une bande formée de plusieurs fibres, par exemple pré-imprégnées de résine. La machine est prévue pour l'application de fibres continues plates, de type rubans, par exemple des fibres de carbone, conditionnées sous forme de bobines. Les moyens de stockage sont formés d'un cantre, schématiquement représenté sous la référence 7, pour recevoir les bobines 9 de fibre. Le cantre est également monté sur un chariot suiveur 71, disposé sur les rails 121 et relié mécaniquement au chariot 13 portant le robot. La machine est prévue ici pour draper des bandes de huit fibres, le cantre comprenant huit mandrins 72, éventuellement motorisés, permettant de recevoir huit bobines de fibre 9. De manière connue en soi, le cantre peut comprendre un rouleau ou poulie oscillante sur laquelle passe chaque fibre, permettant de contrôler la rotation du mandrin en fonction de la position du rouleau oscillant. De même, un mandrin secondaire peut être associé à chaque mandrin pour le rembobinage d'un éventuel film séparateur au fur et à mesure du débobinage de la fibre.

Les moyens d'acheminement 8 comprennent ici des tubes d'acheminement flexibles, équipés de lames flexibles de rigidification, tels que décrits par exemple dans le document brevet WO2012/160270. Les fibres sont acheminées individuellement dans ces tubes d'acheminement du cantre 7 à la tête 2. Les tubes sont rassemblés en un faisceau, représenté schématiquement sous la référence 80 sur la figure 1, et sont placés dans le passage interne d'une gaine 81 flexible, éventuellement refroidie pour refroidir les fibres.

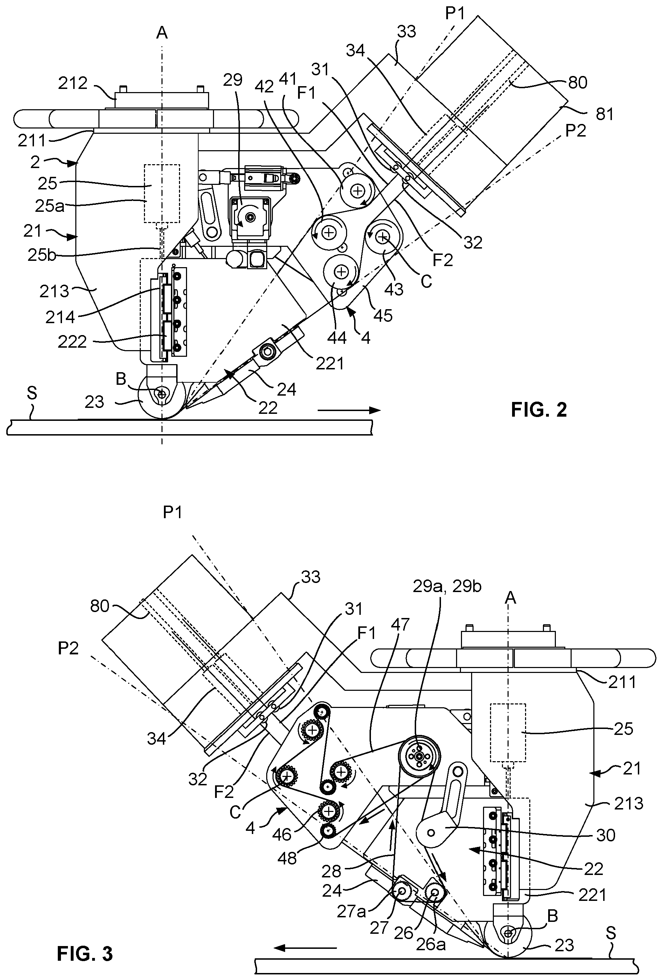

En référence aux Figures 2 et 3, la tête 2 comprend une structure support ou partie fixe 21 par laquelle la tête est montée au bras poly-articulé, et sur laquelle est montée mobile en translation une partie mobile 22. La partie fixe 21 comprend une platine support 211 munie sur une première face supérieure d'une bride 212 pour sa fixation, selon un axe d'assemblage A, au poignet d'extrémité du bras poly-articulé. La platine support 211 porte sur sa deuxième face principale, opposée à la première face principale, deux plaques de montage 213 espacées l'une de l'autre et s'étendant perpendiculairement, la partie mobile 22 étant montée coulissante sur les bords avant des plaques de montage. La partie mobile 22 comprend, de manière connue en soi, le rouleau d'application 23, un système de guidage 24 permettant de guider les fibres vers le rouleau en deux faisceaux ou nappes de fibres selon deux plans de guidage P1, P2, un système de coupe pour couper individuellement chaque fibre, un système de réacheminement pour réacheminer individuellement chaque fibre venant d'être coupée, afin de pouvoir à tout moment stopper et reprendre l'application d'une fibre, ainsi que choisir la largeur de la bande, et un système de blocage afin de bloquer chaque fibre venant d'être coupée. A titre d'exemple, le système de guidage, et les systèmes de coupe, de réacheminement et de blocage sont similaires à ceux décrits dans le document brevet WO2008/132299. La partie mobile 22 comprend deux flasques 221 reliés entre eux par des traverses, et entre lesquels sont montés le rouleau de compactage, le système de guidage, le système de coupe, le système de réacheminement, ainsi que le système de blocage. Les bords arrière des flasques sont équipés de chariots 214 aptes à coulisser, selon un plan de coulissement parallèle à l'axe A, dans des rails 214 complémentaires monté s sur les bords avant des deux plaques de montage. La partie mobile est reliée à la partie fixe par au moins un vérin de compactage 25, de préférence pneumatique, par exemple deux vérins de compactage, les vérins définissant la force de compactage avec laquelle les fibres sont appliquées sur le moule par le rouleau de compactage 23. Chaque vérin est monté par son corps de vérin 25a sur la partie fixe, et sa tige 25b s'étend parallèlement au plan de coulissement et est assemblée au bord supérieur d'un flasque 221. Les vérins sollicitent la partie mobile dans la direction opposée à la platine support, soit verticalement vers le bas dans la configuration de la Figure 2. Les vérins de compactage, par exemple de type pneumatique à double effet, sont commandés en pression pour adapter la force de compactage.

Le système de guidage comprend des premiers canaux et des second canaux disposés en quinconce selon deux plans de guidage P1, P2 se rapprochant l'un de l'autre d'aval en amont pour guider les fibres vers le rouleau sous la forme de deux nappes de fibres. Les premiers canaux et les seconds canaux sont destinés respectivement à recevoir individuellement les fibres F1, F2 de la première et de la seconde nappe. Le système de guidage comprend par exemple trois plaques, de préférence métalliques, montées à plat les unes contre les autres pour définir entre elles les premiers canaux de guidage et les seconds canaux de guidage dans lesquels passent respectivement les fibres de la première nappe et de la deuxième nappe pour les amener tangentiellement au rouleau d'application. Les premiers canaux sont formés à l'interface d'assemblage entre une première plaque extérieure et une plaque centrale, présentant une section transversale triangulaire, et lesdits seconds canaux sont formés à l'interface d'assemblage entre ladite plaque centrale et une deuxième plaque extérieure.

Le système de réacheminement comprend des premiers moyens de réacheminement comportant un premier rouleau d'entraînement 26, monté rotatif dans un alésage transversal de la plaque centrale, et des contre-galets actionnés par des systèmes d'actionnement entre une position de repos et une position active pour plaquer individuellement les fibres F1 de la première nappe contre ledit premier rouleau d'entraînement, et des seconds moyens de réacheminement comportant un second rouleau d'entraînement 27, monté rotatif sur la deuxième plaque extérieure, et des contre-galets actionnés entre une position de repos et une position active par des systèmes d'actionnement pour plaquer individuellement les fibres F2 de la deuxième nappe contre ledit second rouleau d'entraînement. Les deux rouleaux d'entraînement 26, 27 sont entraînés en rotation via une courroie par un moteur 29 monté sur la partie mobile. Chaque rouleau d'entrainement est équipé en extrémité d'un pignon 26a, 27a, une première courroie 28 engrenant avec les pignons des rouleaux d'entrainement et avec un premier pignon 29a monté sur l'arbre du moteur 29. Pour faciliter les opérations de maintenance, la tension de la première courroie est réglée par un système de tension 30 de courroie comprenant un galet tendeur monté à l'extrémité d'un bras pivotant actionné par un vérin.

Le système de coupe, connu en soi, comprend des premiers moyens de coupe pour couper chaque fibre F1 de la première nappe et des seconds moyens de coupe pour couper chaque fibre F2 de la seconde nappe. De même, le système de blocage comprend des premiers moyens de blocage pour bloquer chaque fibre de la première nappe et des seconds moyens de blocage pour bloquer chaque fibre de la seconde nappe.

Selon l'invention, la tête est équipée d'un système limiteur de tension 4, monté sur la partie mobile 22 en amont du système de guidage 24 par rapport au sens de défilement des fibres dans la tête, dans lequel les fibres F1, F2 entrant dans la tête passent afin de limiter, voire supprimer, la tension dans les fibres appliquées par le rouleau de compactage. Le système limiteur de tension 4 comprend ici un premier ensemble de deux cylindres 41, 42 pour les fibres F1 de la première nappe, et un deuxième ensemble de deux cylindres 43, 44 pour les fibres F2 de la deuxième nappe.

En entrée de tête, la tête comprend une rangée de premières poulies 31 montées rotatives sur un premier axe pour guider les fibres F1 de la première nappe provenant des tubes vers le système limiteur de tension, et une rangée de deuxièmes poulies 32 montées rotatives sur un second axe pour les fibres F2 de la seconde nappe, ces poulies 31, 32 étant montées sur un support 33 fixé à la partie fixe 21. Les tubes d'acheminement 80 sont montés en extrémité audit support 33, en amont des deux rangées de poulies, via des systèmes de fixation 34, par exemple sous la forme de cassettes, en deux rangées parallèles de manière à former les deux nappes de fibres. La gaine 81 est fixée en extrémité audit support 33.

En sortie des tubes d'acheminement, les fibres F1 de la première nappe passent sur les premières poulies 31, puis sur un premier cylindre 41 et sur un deuxième cylindre 42. En sortie du deuxième cylindre 42, les fibres F1 sont disposées selon le plan P1 et entrent directement dans les premiers canaux de guidage du système de guidage 24. Les fibres F2 de la deuxième nappe passent sur les secondes poulies 32, puis sur un premier cylindre 43 et un deuxième cylindre 44. En sortie du deuxième cylindre 44, les fibres F2 sont disposées selon le plan P2 et entrent directement dans les seconds canaux de guidage. Chaque fibre vient en contact, directement ou indirectement, par une première face principale contre un premier cylindre, puis par une deuxième face principale contre un deuxième cylindre.

Les cylindres 41-44 des premier et deuxième ensembles sont montés rotatifs en porte à faux sur une plaque support 45 qui est assemblée à la partie mobile, les axes C de rotation des cylindres 41-44 étant parallèles entre eux, et parallèles à l'axe de rotation B du rouleau de compactage 23, les cylindres s'étendant perpendiculairement depuis une première face principale de la plaque support. Les cylindres 41-44 sont aptes à être entraînés positivement en rotation par le moteur d'entrainement 28 du système de réacheminement. Chaque cylindre est équipé en extrémité, du côté de la deuxième face principale de la plaque support 45, d'une roue dentée 46. L'entrainement en rotation des cylindres est obtenu au moyen d'une deuxième courroie 47, par exemple à double denture, engrenant sur un deuxième pignon 29b de l'arbre du moteur d'entrainement 28, ainsi que sur chaque roue dentée 46 d'un cylindre, la deuxième courroie passant également sur des galets de renvoi 48 pour définir un chemin de courroie permettant d'entrainer tous les cylindres. Un système de galet tendeur peut également être prévu pour régler la tension de la deuxième courroie. Les diamètres des rouleaux d'entrainement 26, 27 et de leurs pignons 26a, 26b, et les diamètres des cylindres 41-44 et de leurs roues dentées 46 sont définis de sorte que la vitesse périphérique des cylindres 41-44 soit supérieure, par exemple d'environ 20%, à la vitesse périphérique des rouleaux d'entraînement. En variante une seule courroie est prévue pour l'entrainement en rotation des rouleaux d'entrainement et des cylindres.

En fonctionnement, le moteur d'entrainement 29 est piloté par l'unité de commande de la machine pour entraîner les rouleaux d'entrainement 26, 27 de sorte que la vitesse périphérique des rouleaux de réacheminement soit égale à la vitesse périphérique du rouleau de compactage 26 en appui contre une surface de drapage, la vitesse périphérique du rouleau de compactage correspondant à la vitesse du point central de l'outil ou TCP (Tool Center Point) sur la surface de drapage S, le TCP étant le milieu de la ligne d'intersection entre le rouleau de compactage et la surface de drapage. Lorsque la tête n'est pas en contact avec la surface de drapage, par exemple lors d'une trajectoire de liaison entre deux trajectoires de drapage, chaque extrémité de fibre pourra également être réacheminée depuis le système de coupe jusqu'au rouleau de compactage en pilotant le moteur d'entrainement et le contre-galet de réacheminement associé à ladite fibre.

Certaines fibres, de par leur fragilité, leur élasticité ou leur pégosité, ne peuvent être en contact direct sur les cylindres en rotation. Pour mettre en œuvre ces fibres, tel que décrit dans les documents précités, des courroies peuvent être montées autour de chaque cylindre, de sorte qu'une courroie vienne s'intercaler entre chaque fibre et le cylindre, chaque courroie étant apte à adhérer à une fibre et à être entraînée plus ou moins par le cylindre en fonction de la pression exercée par la fibre sur la courroie, ladite pression étant proportionnelle à la tension de la fibre.

Afin de limiter la tension des fibres avant leur entrée dans les tubes d'acheminement, la machine comprend un système limiter de tension 104, placé dans le cantre, tel que décrit dans les documents brevet précités, de préférence un système correspondant à celui décrit dans la demande de brevet FR2114113.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Machine d'application de fibres pour la réalisation de pièces en matériau composite comprenant une tête (2) d'application de fibres comprenant une partie fixe (21) et une partie mobile (22), la partie mobile comprenant
- un système de compactage comprenant au moins un rouleau d'application (23),
- un système de guidage pour guider au moins une fibre (F1, F2) vers ledit rouleau d'application selon un plan de guidage (P1, P2), et
- un système de coupe de fibre et un système de réacheminement de fibre,
la partie mobile (22) étant montée coulissante sur la partie fixe (21), et étant sollicitée par au moins un vérin de compactage (25) monté entre la partie fixe et la partie mobile,
ladite machine comprenant en outre un système limiteur de tension (4) comprenant au moins un cylindre (41-44) sur lequel chaque fibre est apte à venir s'enrouler partiellement, et des moyens d'entraînement (29) aptes à entraîner en rotation ledit cylindre,
**caractérisée en ce que** ledit système limiteur de tension (4) est monté sur la partie mobile (22) de la tête d'application, en amont du système de guidage (24).

2. Machine selon la revendication 1, **caractérisée en ce que** ledit système limiteur de tension (4) est monté sur la partie mobile (22) de la tête d'application de sorte que la fibre (F1, F2) sortant du système limiteur de tension soit disposé selon ledit plan de guidage (P1, P2).

3. Machine selon la revendication 1 ou 2, **caractérisée en ce que** ledit système de guidage (24) est apte à guider une pluralité de fibres (F1, F2) vers le rouleau d'application (23) sous la forme d'une bande, le système de guidage (24) comprend des premiers et seconds moyens de guidage pour guider les fibres vers le rouleau d'application sous la forme de deux nappes selon deux plans de guidage (P1, P2), le système limiteur de tension (4) comprenant un premier ensemble d'au moins un cylindre (41, 42) sur lequel passe la ou les fibres (F1) d'une première nappe, et un second ensemble d'au moins un cylindre (42,43) sur lequel passe la ou les fibres (F2) d'une deuxième nappe.

4. Machine selon l'une des revendications 1 à 3, **caractérisée en ce que** le système de réacheminement comprend, pour chaque fibre, un contre-galet actionné par un système d'actionnement entre une position de repos et une position active pour plaquer la fibre contre au moins un rouleau d'entraînement (26, 27), ledit rouleau d'entraînement et le(s) cylindre(s) (41- 44) du système limiteur de tension (4) étant aptes à être entraînés en rotation par un moteur d'entraînement (29) commun, monté sur la partie mobile, par l'intermédiaire d'un système de transmission (28, 29a,29b, 47, 46, 47, 48), de sorte que la vitesse périphérique des cylindres soit supérieure à la vitesse périphérique du rouleau d'entrainement.

5. Machine selon l'une des revendications 1 à 4, **caractérisée en ce qu'**elle comprend un deuxième système limiteur de tension (104), disposé en amont de moyens d'acheminement (8) apte à acheminer une ou plusieurs fibres depuis des moyens de stockage (7) vers la tête d'application (2).

6. Procédé de fabrication d'une pièce en matériau composite comprenant l'application de fibres continues sur une surface d'application, **caractérisé en ce que** l'application de fibres est réalisée au moyen d'une machine d'application de fibres selon l'une des revendications 1 à 5, par déplacement relatif de la tête d'application par rapport à la surface de drapage selon des trajectoires de drapage.

## Patentansprüche

1. Faserapplikationsmaschine zur Herstellung von Bauteilen aus Verbundmaterial, umfassend einen Faserapplikationskopf (2), der einen festen Teil (21) und einen beweglichen Teil (22) umfasst, wobei der bewegliche Teil Folgendes umfasst:
- ein Verdichtungssystem, das mindestens eine Auftragswalze (23) umfasst,
- ein Führungssystem zum Führen mindestens einer Faser (F1, F2) zu der Auftragswalze gemäß einer Führungsebene (P1, P2), und
- ein Faserschneidsystem und ein Faserumleitungssystem,
wobei der bewegliche Teil (22) verschiebbar an dem festen Teil (21) montiert ist und von mindestens einem Verdichtungszylinder (25) vorgespannt wird, der zwischen dem festen Teil und dem beweglichen Teil montiert ist,
wobei die Maschine ferner ein Spannungsbegrenzungssystem (4), das mindestens einen Zylinder (41-44) umfasst, auf dem sich jede Faser teilweise aufwickeln kann, und eine Antriebseinrichtung (29) umfasst, die dazu ausgelegt ist, den Zylinder in Drehung zu versetzen,
**dadurch gekennzeichnet, dass** das Spannungsbegrenzungssystem (4) an dem beweglichen Teil (22) des Applikationskopfs vor dem Führungssystem (24) montiert ist.

2. Maschine nach Anspruch 1, **dadurch gekennzeichnet, dass** das Spannungsbegrenzungssystem (4) so an dem beweglichen Teil (22) des Applikationskopfs montiert ist, dass die aus dem Spannungsbegrenzungssystem austretende Faser (F1, F2) gemäß der Führungsebene (P1, P2) angeordnet ist.

3. Maschine nach Anspruch 1 oder 2, **dadurch gekennzeichnet, dass** das Führungssystem (24) dazu ausgelegt ist, eine Vielzahl von Fasern (F1, F2) in Form eines Streifens zu der Auftragswalze (23) zu führen, wobei das Führungssystem (24) eine erste und eine zweite Führungseinrichtung umfasst, um die Fasern in Form von zwei Bahnen in zwei Führungsebenen (P1, P2) zu der Auftragswalze zu führen, wobei das Spannungsbegrenzungssystem (4) eine erste Baugruppe aus mindestens einem Zylinder (41, 42), über den die Faser(n) (F1) einer ersten Bahn läuft/laufen, und eine zweite Baugruppe aus mindestens einen Zylinder (42, 43) umfasst, über den die Faser(n) (F2) einer zweiten Bahn läuft/laufen.

4. Maschine nach einem der Ansprüche 1 bis 3, **dadurch gekennzeichnet, dass** das Umleitungssystem für jede Faser eine Gegenrolle umfasst, die durch ein Betätigungssystem zwischen einer Ruheposition und einer aktiven Position betätigt wird, um die Faser gegen mindestens eine Antriebsrolle (26, 27) zu drücken, wobei die Antriebsrolle und der/die Zylinder (41 - 44) des Spannungsbegrenzungssystems (4) dazu ausgelegt sind, durch einen gemeinsamen Antriebsmotor (29), der an dem beweglichen Teil montiert ist, über ein Übertragungssystem (28, 29a, 29b, 47, 46, 47, 48) in Drehung versetzt zu werden, so dass die Umfangsgeschwindigkeit der Zylinder höher ist als die Umfangsgeschwindigkeit der Antriebsrolle.

5. Maschine nach einem der Ansprüche 1 bis 4, **dadurch gekennzeichnet, dass** sie ein zweites Spannungsbegrenzungssystem (104) umfasst, das vor einer Fördereinrichtung (8) angeordnet ist, die dazu ausgelegt ist, eine oder mehrere Fasern von einer Lagerungseinrichtung (7) zu dem Applikationskopf (2) zu befördern.

6. Verfahren zum Herstellen eines Bauteils aus Verbundmaterial, umfassend das Applizieren von Endlosfasern auf eine Applikationsoberfläche, **dadurch gekennzeichnet, dass** das Applizieren von Fasern mittels einer Faserapplikationsmaschine nach einem der Ansprüche 1 bis 5 durch relatives Verschieben des Applikationskopfes in Bezug auf die Drapieroberfläche in Drapierbahnen erfolgt.

## Claims

1. Fibre application machine for the production of composite material parts comprising a fibre application head (2) comprising a fixed portion (21) and a movable portion (22), the movable portion comprising
- a compaction system comprising at least one application roller (23),
- a guide system for guiding at least one fibre (F1, F2) towards said application roller along a guide plane (P1, P2), and
- a fibre cutting system and a fibre rerouting system,
the moving portion (22) being slidably mounted on the fixed portion (21), and being biased by at least one compaction jack (25) mounted between the fixed portion and the moving portion,
said machine further comprising a tension limiting system (4) comprising at least one cylinder (41-44) on which each fibre is able to be partially wound, and drive means (29) able to drive said cylinder in rotation,
**characterized in that** said tension limiting system (4) is mounted on the movable portion (22) of the application head, upstream of the guide system (24).

2. Machine according to claim 1, **characterized in that** said tension limiting system (4) is mounted on the movable portion (22) of the application head so that the fibre (F1, F2) exiting from the tension limiting system is arranged in said guide plane (P1, P2).

3. Machine according to claim 1 or 2, **characterized in that** said guide system (24) is able to guide a plurality of fibres (F1, F2) towards the application roller (23) in the form of a band, the guide system (24) comprises first and second guide means for guiding the fibres towards the application roller in the form of two bundles along two guide planes (P1, P2), the tension limiting system (4) comprising a first set of at least one cylinder (41, 42) over which the fibre(s) (F1) of a first bundle passes, and a second set of at least one cylinder (42, 43) over which the fibre(s) (F2) of a second bundle passes.

4. Machine according to one of claims 1 to 3, **characterized in that** the rerouting system comprises, for each fibre, a counter-roller actuated by an actuation system between a rest position and an active position to press the fibre against at least one drive roller (26, 27), said drive roller and the cylinder(s) (41- 44) of the tension limiting system (4) being able to be driven in rotation by a common drive motor (29), mounted on the moving portion, via a transmission system (28, 29a, 29b, 47, 46, 47, 48), so that the peripheral speed of the cylinders is greater than the peripheral speed of the drive roller.

5. Machine according to one of claims 1 to 4, **characterized in that** it comprises a second tension limiting system (104), arranged upstream of conveying means (8) able to convey one or more fibres from storage means (7) to the application head (2).

6. Method for manufacturing a composite material part comprising the application of continuous fibres onto an application surface, **characterized in that** the application of fibres is carried out by means of a fibre application machine according to one of claims 1 to 5, by relative displacement of the application head with respect to the lay-up surface according to lay-up trajectories.
